# EUROPÄISCHE PATENTANMELDUNG

(11) **EP 3 954 896 A1**
(43) Veröffentlichungstag der Anmeldung: **16.02.2022**
(21) Anmeldenummer: 20191101.3
(22) Anmeldetag: 14.08.2020
(51) Int. Cl.: F03D 7/04, F03D 7/02, H02J 3/00, H02J 3/24, H02J 3/38

(54) **PENDELDÄMPFUNG BEI WINDENERGIEANLAGEN**

(71) Anmelder: Wobben Properties GmbH, 26607 Aurich (DE)
(72) Erfinder: Quitmann, Eckard, 28199 Bremen (DE); Engelken, Sönke, 28209 Bremen (DE)
(74) Vertreter: Eisenführ Speiser

(57) **Zusammenfassung**

Die Erfindung betrifft eine Steuereinheit für einen Umrichter, insbesondere einer Windenergieanlage und/oder eines Windparks, umfassend: einen Eingang zum Aufnehmen einer erfassten Spannung (Umeas, Upoc) und/oder eines erfassten Stromes (Imeas, Iline), einen Eingang zum Aufnehmen eines Spannungssollwertes (Uset) und/oder eines Stromsollwertes (Iset), einen Eingang zum Aufnehmen eines Korrekturwertes (Bi) und eine Regelung (500), die dazu eingerichtet ist, in Abhängigkeit der erfassten Spannung (Umeas, Upoc) und/oder des erfassten Stromes (Imeas, Iline) und des Spannungssollwertes Uset und/oder des Stromsollwertes Iset und dem Korrekturwert (Bi) einen Blindleistungssollwert (Qset) für eine modulierte, bevorzugt amplitudenmodulierte Blind- und/oder Wirkleistung (Qmod, Pmod) des Umrichters zu erzeugen.

## Beschreibung

Die vorliegende Erfindung betrifft eine Steuereinheit einer Windenergieanlage und/oder eines Windparks, insbesondere eine Pendeldämpfung.

Windenergieanlagen sind allgemein bekannt und werden innerhalb eines elektrischen Versorgungsnetzes zumeist als Erzeuger betrieben, d.h. sie speisen elektrische Leistung in das elektrische Versorgungsnetz ein.

Elektrische Versorgungsnetze, auch umgangssprachlich als Stromnetz bezeichnet, sind ein komplexes Netzwerk zur Übertragung und Verteilung elektrischer Energie.

Bei räumlich (weit) ausgedehnten elektrischen Versorgungsnetzes, die zu meist mehrere Spannungsebenen aufweisen, die sowohl horizontal als auch vertikal miteinander verbunden sind, spricht man auch von Verbundnetzen, bspw. das UCTE-Netz, oder westliche USA und Canada.

Gerade diese räumliche Ausdehnung kann aber unter ungünstigen Umständen zu elektromechanischen Schwingungen führen, die sich durch das gesamte Verbundnetz ziehen. Ein Beispiel für derartige Schwingungen sind die sogenannten Netzpendelungen, die sich infolge einer Anregung des Verbundnetzes in Form von Frequenz- und Leistungspendelungen mit charakteristischer Periodendauer äußern.

Zur Gewährleistung eines sicheren und stabilen Verbundnetzbetriebs müssen diese Netzpendelungen aber ausreichend gedämpft werden.

Derzeitig wird derartigen Netzpendelungen nur in einigen konventionellen Kraftwerken mit einem sogenannten Pendeldämpfungsgerät (engl. power system stabilizer, PSS) begegnet.

Im Zuge der zunehmenden regenerativen und nicht-konventionellen Erzeuger, scheint dies aber für die Netzsicherheit unzureichend zu sein.

Aufgabe der vorliegenden Erfindung ist es daher, eines der oben genannten Probleme zu adressieren. Insbesondere soll eine Möglichkeit geschaffen werden, elektromechanische Schwingungen zwischen Erzeugern, und insbesondere deren Generatoren oder Netzregionen, mittels Windenergieanlagen zu dämpfen. Zumindest soll aber eine Alternative zu bisher Bekanntem bereitgestellt werden.

Erfindungsgemäß wird somit eine Steuereinheit einer Windenergieanlage und/oder eines Windparks vorgeschlagen, umfassend: einen Eingang zum Aufnehmen einer erfassten Spannung und/oder eines erfassten Stromes, einen Eingang zum Aufnehmen eines Spannungssollwertes und/oder eines Stromsollwertes, einen Eingang zum Aufnehmen eines Korrekturwertes und eine Regelung, die dazu eingerichtet ist, in Abhängigkeit der erfassten Spannung und/oder des erfassten Stromes und des Spannungssollwertes und/oder des Stromsollwertes und dem Korrekturwert (Bi) einen Blindleistungssollwert (Qset) für eine modulierte, bevorzugt amplitudenmodulierte, Blind- und/oder Wirkleistung des Umrichter zu erzeugen.

Es wird also insbesondere eine Steuereinheit für einen Umrichter einer Windenergieanlage bzw. einen Windpark vorgeschlagen, die dazu eingerichtet ist, elektromechanischen Schwingungen, insbesondere in Form von Netzpendelungen (engl. inter area oscillations), entgegenzuwirken bzw. diese zu bedämpfen.

Bevorzugt erfolgt also das Bedämpfen der Netzpendelungen mittels einer Blindleistungsstellung, alternativ und/oder zusätzlich durch eine Wirkleistungsstellung.

Hierfür wird insbesondere eine modulierte, insbesondere amplitudenmodulierte, Blind- und/oder Wirkleistung verwendet.

Unter einer modulierten, insbesondere amplitudenmodulierten, Wirk-und/oder Blindleistung ist insbesondere eine Wirk- und/oder Blindleistung zu verstehen, die eine zusätzliche Modulation aufweist, die außerhalb der Grundfrequenz liegt, die durch das elektrische Versorgungsnetz, bspw. mit 50Hz oder 60Hz, vorgegeben ist. Dies bedeutet insbesondere, dass die Wirk- und/oder Blindleistung einen weiteren Schwingungsanteil aufweist, der von der Grundfrequenz verschieden ist, und so moduliert ist, dass einer Netzpendelung entgegengewirkt wird.

Es wird also insbesondere eine dynamische bzw. oszillierende Blindleistungsstellung vorgeschlagen, durch die aktiv in den Wirkleistungsbezug benachbarter Verbraucher und somit in die Netzpendelungen eingegriffen wird. Dies erfolgt insbesondere darüber, dass durch die Blindleistungsstellung eine Frequenzänderung im elektrischen Versorgungsnetz herbeigeführt wird, die zu einem veränderten Wirkleistungsbezug bei benachbarten Verbrauchern führt, was den Netzpendelungen entgegenwirkt.

Hierzu weist die Steuereinheit Eingänge auf, mit denen Spannungs- und Stromwerte erfasst werden können, insbesondere eine am Netzanschlusspunkt der Windenergieanlage bzw. des Windparks erfasste Spannung und einen am Netzanschlusspunkt der Windenergieanlage bzw. des Windparks erfassten Strom sowie einen entsprechenden Spannungssollwert für die Windenergieanlage bzw. den Windpark, insbesondere am Netzanschlusspunkt.

Bevorzugt werden Spannung und/oder Strom erfasst, um eine Frequenz im elektrischen Versorgungsnetz zu bestimmen. Zum Bestimmen der Frequenz werden bspw. die Zeitverläufe der Spannung und/oder des Stromes verwendet, insbesondere um die Schwingungen der Amplitude von Spannung und/oder Strom zu ermitteln.

Es wird also insbesondere auch vorgeschlagen, aus der erfassten Spannung und/oder dem erfassten Strom eine Frequenz des elektrischen Versorgungsnetzes zu bestimmen, insbesondere um diese auf Netz- bzw. Leistungspendelungen hin zu untersuchen, bspw. durch Beobachtung der Amplituden von Strom und/oder Spannung.

Ferner wird zudem vorgeschlagen, dass zum Erfassen der Spannung und/oder des Stromes ein hochabgetastetes Signal verwendet wird, insbesondere um die Frequenz möglichst hochauflösend zu bestimmen, bspw. mit einer Frequenz von mehr als 100 Hz, bevorzugt zwischen 2 bis 5 kHz.

Zudem weist die Steuereinheit einen Eingang zum Aufnehmen eines Korrekturwertes auf, der insbesondere dazu verwendet wird, die Spannungs-Blindleistungssteuerung zu korrigieren, insbesondere so, dass die Netzpendelungen bedämpft werden.

Für die Bedämpfung der Netzpendelungen ist eine Regelung vorgesehen, die dazu eingerichtet ist, in Abhängigkeit der erfassten Spannung und/oder des erfassten Stromes und des Spannungssollwertes und/oder des Stromsollwertes Iset und dem Korrekturwert einen Blindleistungssollwert für die Windenergieanlage bzw. den Windpark zu erzeugen.

Bevorzugt werden die Netzpendelungen mittels einer Blindleistungsstellung bedämpft. Hierfür wird insbesondere ein Spannungssollwert verwendet.

Vorzugsweise umfasst der Korrekturwert wenigstens einen Steuerwert oder der Steuerwert wird aus diesem gebildet wird.

Der Korrekturwert kann also bspw. eine Vielzahl von Größen umfassen, wobei wenigstens eine Größe direkt auf die Regelung, insbesondere die Spannungs-Blindleistungs-Regelung, wirkt, bspw. in Form eines Steuerwertes für die Spannung innerhalb der Regelung.

Vorzugsweise umfasst die Steuereinheit ferner eine Filterung, die dazu eingerichtet ist, aus einer potentiell kritischen Frequenz den Korrekturwert zu erzeugen.

Der Korrekturwert wird also insbesondere aus einer Frequenz bzw. einem Frequenzband ermittelt, welches auf eine Netzpendelung hinweist bzw. von dem zu erwarten ist, dass es eine Netzpendelung aufweist. Bspw. treten Netzpendelungen auf Grund der Topologie des elektrischen Versorgungsnetzes im Bereich von 3 Hz auf. Dieser Bereich wird dann durch die Filterung auf mögliche Netzpendelungen hin untersucht, bspw. unter Verwendung eines Kalman-Filters.

Vorzugsweise berücksichtigt die Filterung zum Erzeugen des Korrekturwertes wenigstens einen Vergleichswert, der eine Identifikation einer kritischen Frequenz ermöglicht.

Es wird also insbesondere vorgeschlagen, dass nachdem eine kritische Frequenz identifiziert worden ist, diese mit einem Vergleichswert abgeglichen wird, insbesondere um festzustellen, ob die Amplitude der identifizierten kritischen Frequenz signifikant ist oder nicht. Sofern die Amplitude der kritischen Frequenz durch den Abgleich als signifikant eingestuft worden ist, wird aus dieser Frequenz ein entsprechender Korrekturwert in Form eines Steuerwertes bestimmt, der auf die Regelung der Windenergieanlage wirkt, insbesondere auf die Spannungs-Blindleistungs-Regelung.

Vorzugsweise umfasst die Filterung hierfür einen Kalman-Filter und eine Phasenkorrektur, wobei der Kalman-Filter dazu eingerichtet ist, aus einer potentiell kritischen Frequenz einen Problemvektor zu erzeugen, und die Phasenkorrektur dazu eingerichtet ist, den Problemvektor zu korrigieren, um einen phasenkorrigierten Vektor zu erhalten, der eine Grundlage für den Korrekturwert bildet.

Es wird also insbesondere auch vorgeschlagen, dass innerhalb der Steuereinheit, insbesondere in Bezug auf die Frequenzen, mit Vektoren gearbeitet wird.

Vorzugsweise arbeitet die Filterung zudem mit aß-Koordinaten und weist wenigstens einen Amplituden-Ansprech-Schwellwert auf, bei dessen überschreiten eine kritische Frequenz identifiziert wird.

Vorzugsweise umfasst die Steuereinheit ferner eine Frequenzbestimmung, die dazu eingerichtet ist, aus einer Vielzahl von Frequenzen wenigstens eine potentiell kritische Frequenz zu identifizieren, die insbesondere eine Netzpendelung im elektrischen Versorgungsnetz indiziert.

Es wird insbesondere also auch vorgeschlagen, dass die Steuereinheit dazu eingerichtet ist, eine Vielzahl von Frequenzen in einem Frequenzband (z.B. zwischen 0,1Hz und 10Hz) auf kritische Frequenzen hin zu untersuchen.

Die Frequenzbestimmung identifiziert also insbesondere unter Zuhilfenahme von Vorgaben des Netzbetreibers diejenigen unter den auftretenden Frequenzen im Spektrum von Strom und/oder Spannung, die zu hohe Schwingungsamplituden aufweisen. Die Vorgaben des Netzbetreibers können sich z.B. aus Erfahrungswerten (praktisch) oder Erwartungswerten (simulatorisch) speisen.

Diese zu hohen Schwingungsamplituden können dann mittels der Steuereinheit bedämpft werden.

Die Frequenzbestimmung ist somit insbesondere auch dazu eingerichtet, eine Information über das elektrische Versorgungsnetz in Form einer Frequenz, bevorzugt in Form eines Vektors bereitzustellen.

Vorzugsweise umfasst die Frequenzbestimmung wenigstens zwei verschiedene Modi, um eine potentiell kritische Frequenz zu identifizieren.

Ein Modus ist bspw. das Überwachen einer bestimmten Frequenz, die vom Netzbetreiber vorgegeben ist.

Ein anderer Modus ist bspw. das Überwachen eines Frequenzbereiches bzw. Frequenzband, welches insbesondere vom Netzbetreiber vorgegeben ist.

Erfindungsgemäß wird ferner ein Verfahren zum Steuern einer Windenergieanlage und/oder eines Windparks vorgeschlagen, umfassend die Schritte: Erfassen wenigstens einer Spannung und/oder eines Stromes und Austausch einer Blindleistung mit einem elektrischen Versorgungsnetz unter Verwendung einer vorstehend oder nachstehend beschriebenen Steuereinheit so, dass einer Netzpendelung entgegengewirkt bzw. ihre Amplitude bedämpft wird.

Es wird also insbesondere vorgeschlagen, den Strom und/oder die Spannung zu erfassen und darin enthaltene Frequenzbänder auf signifikante Amplituden hin zu untersuchen, bspw. mittels einer schnellen Fourier-Transformation. Darauf basierend wird dann eine Blindleistung mit dem elektrischen Versorgungsnetz ausgetauscht, die eine zusätzliche Modulation aufweist, die außerhalb der Grundfrequenz liegt, die durch das elektrische Versorgungsnetz, bspw. mit 50Hz oder 60Hz, vorgegeben ist.

Die Amplitude der Wirk- und/oder Blindleistung wird also so moduliert, dass den erfassten Netzpendelungen entgegengewirkt wird. Hierfür wird bspw. die Amplitude im Bereich von 0,8 Hz als Oberwelle moduliert, mit einer entsprechenden Grundfrequenz, von bspw. 50 Hz oder 60 Hz.

Erfindungsgemäß wird ferner ein Verfahren zum Steuern eines elektrischen Versorgungsnetzes vorgeschlagen, umfassend die Schritte: Vorgeben einer Frequenz oder eines Frequenzbereiches, insbesondere durch einen Netzbetreiber, Prüfen, ob innerhalb der Frequenz oder des Frequenzbereiches Schwingung auftreten, die insbesondere eine Netzpendelung darstellen und Regulieren der Blindleistung innerhalb des elektrischen Versorgungsnetzes so, dass die Schwingung gedämpft wird.

Es wird also insbesondere vorgeschlagen, die Blindleistung innerhalb des elektrischen Versorgungsnetzes an bestimmten Punkten zu modulieren, insbesondere an solchen, die eine hohe Dichte und Leistung an ohmschen Verbrauchern aufweisen.

Vorzugsweise erfolgt das Regulieren der Blindleitung mittels wenigstens einer Windenergieanlage oder eines Windparks, insbesondere umfassend eine vorstehend oder nachstehend beschriebene Steuereinheit.

Erfindungsgemäß wird ferner eine Windenergieanlage und/oder ein Windpark vorgeschlagen, umfassend eine vorstehend oder nachstehend beschriebene Steuereinheit.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt einen schematischen Aufbau einer Steuereinheit einer Windenergieanlage und/oder eines Windparks gemäß einer Ausführungsform.
- Fig. 3: zeigt einen schematischen Aufbau eines Frequenzblockes einer Steuereinheit, insbesondere wie in Fig. 2 gezeigt.
- Fig. 4: zeigt einen schematischen Aufbau eines Filterblocks einer Steuereinheit, insbesondere wie in Fig. 2 gezeigt.
- Fig. 5: zeigt einen schematischen Aufbau eines Reglerblocks einer Steuereinheit, insbesondere wie in Fig. 2 gezeigt.
- Fig. 6: zeigt eine amplitudenmodulierte Blindleistung.

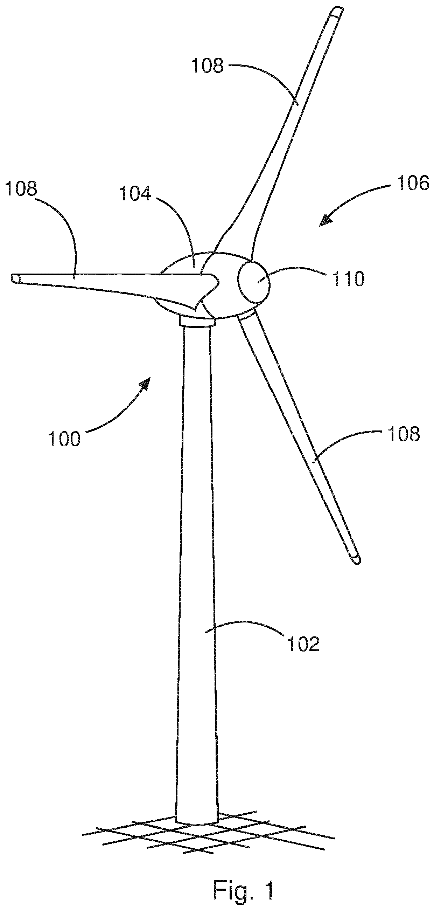

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zum Betreiben der Windenergieanlage ist ferner eine vorstehend oder nachstehend beschriebene Steuereinheit vorgesehen.

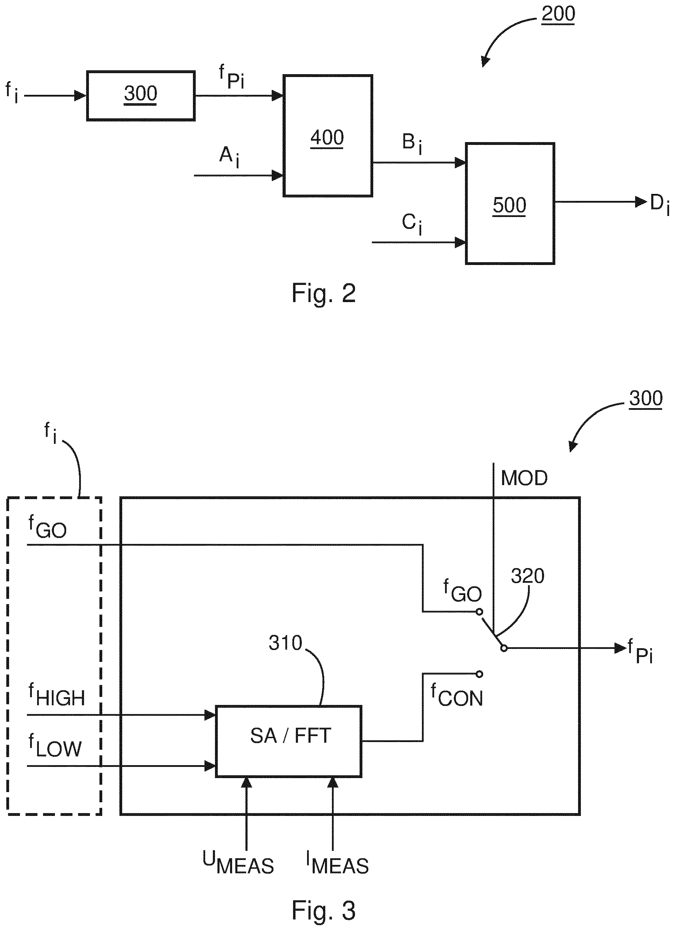

Fig. 2 zeigt einen schematischen Aufbau einer Steuereinheit 200 einer Windenergieanlage und/oder eines Windparks gemäß einer Ausführungsform.

Die Steuereinheit 200 umfasst einen Frequenzblock 300, einen Filterblock 400 und einen Reglerblock 500.

Der Frequenzblock 300 weist als Eingangsgröße wenigstens eine Frequenz fi auf, bspw. in Form eines Frequenzsollwertes oder einer Frequenzvorgabe.

Die Eingangsgröße fi wird dabei insbesondere dazu verwendet, einen bestimmten Frequenzbereich des elektrischen Versorgungsnetzes zu überwachen, bspw. Frequenzen im Bereichen zwischen 0,1 Hz und 5 Hz.

Besonders bevorzugt ist die Eingangsgröße als Vektor ausgebildet und umfasst insbesondere wenigstens eine Vorgabe des Netzbetreibers, bspw, in Form eines Frequenzvorgabevektor fGO, oder ein Frequenzband, bspw. umfassend einen unteren Grenzwertes f:_Low und/oder einen oberen Grenzwertes f_High.

Bevorzugt kann zudem über einen weiteren Eingangswert, bspw. dem Steuerwert MOD, die Betriebsart des Frequenzblockes eingestellt werden, bspw. zwischen einem Betrieb mit festen Frequenzvorgaben und einem Betrieb mit Grenzwerten f_Low und f_High, die ein Frequenzfenster definieren.

Zudem weist der Frequenzblock 300 wenigstens einen Messeingang insbesondere für Strom und/oder Spannung auf, der bevorzugt dreiphasig ausgebildet ist.

In einer besonders bevorzugten Ausführungsform ist der Frequenzblock zudem dazu ausgebildet, insbesondere die, durch den Messeingang 310 erfassten Ströme und/oder Spannungen auf Schwingungen innerhalb eines Frequenzfensters zu untersuchen, bspw. das Frequenzfenster zwischen f_Low und f_High. Bevorzugt wird die zum Leistungstransport im Netz benutzte Grundschwingung (z.B. 50Hz) dabei gezielt ausgeblendet, und es wird auf signifikanten Amplituden unter- und/oder oberhalb der Grundschwingungsfrequenz hin untersucht.

Aus der Eingangsgröße bestimmt der Frequenzblock 300 wenigstens eine potentiell kritische Frequenz fpi.

Unter einer potentiell kritischen Frequenz fpi sind dabei all jene Frequenzen bzw. Frequenzbereiche zu verstehen, in denen eine Dämpfung mittels der Steuereinheit bewirkt werden soll. Hierbei handelt es sich typischerweise um Frequenzen, bei denen Netzbereiche eines großen elektrischen Versorgungsnetzes oder einzelne Erzeugungseinheiten in dem elektrischen Versorgungsnetz gegeneinander pendeln, z.B. indem die Rotorwinkel von Synchronmaschinen bei dieser Frequenz gegenläufig zueinander schwingen. Diese Pendelungen, auch Netzpendelungen genannt, können zu ungewollten Stromflüssen zwischen Netzbereichen oder Erzeugungseinheiten führen, die unter Umständen schädlich für Betriebsmittel innerhalb des elektrischen Versorgungsnetzes sind, wie bspw. Transformatoren oder Leitungen. Auch können solche Netzpendelungen zu mechanischen Torsionsbelastungen an den Wellen von Kraftwerken führen, die die Lebensdauer der Kraftwerkswelle reduzieren.

Die potentiell kritische Frequenz fpi wird zudem als Eingangssignal für den Filterblock 400 verwendet.

Eine weitergehende Ausführungsform eines solchen Frequenzblockes 300 ist der Fig. 3 zu entnehmen.

Der Filterblock 400 weist als Eingangsgröße wenigstens eine bzw. die potentiell kritische Frequenz fpi und einen Vergleichswert Ai auf.

Durch einen Abgleich der potentiell kritischen Frequenz fpi mit dem Vergleichswert Ai selektiert der Filterblock 400 all jene Schwingungen heraus, die eine kritische Frequenz fki darstellen und ermittelt hierfür einen Korrekturwert Bi.

Der Korrekturwert Bi, der auch als Dämpfung verstanden werden kann, wird anschließend als Eingangssignal für den Reglerblock 500 verwendet.

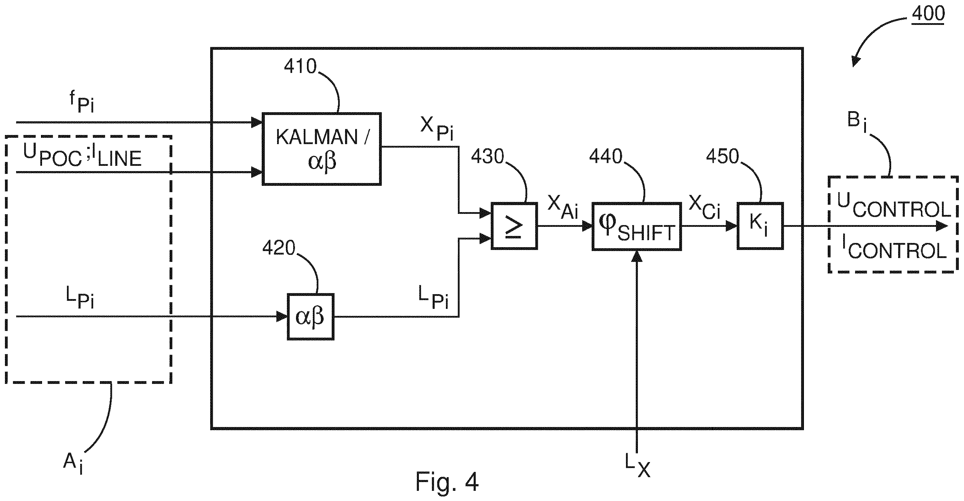

Eine weitergehende Ausführungsform eines solchen Filterblocks 400 ist der Fig. 4 zu entnehmen.

Der Reglerblock 500 weist als Eingangsgröße wenigstens den Korrekturwert Bi und eine Führungsgröße Ci auf, aus welchen die Stellgröße Di ermittelt wird.

Die Stellgröße Di wird anschließend verwendet, um einen Generator und/oder einen mit dem Generator verbundenen Wechselrichter anzusteuern, insbesondere um zu hohen Amplituden auf potentiell kritischen Frequenzen innerhalb des elektrischen Versorgungsnetz entgegenzuwirken.

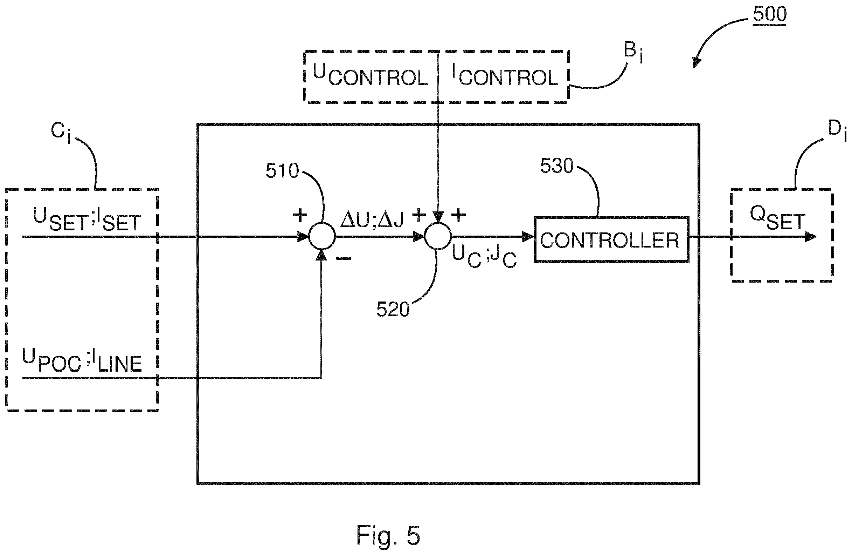

Eine weitergehende Ausführungsform eines solchen Reglerblocks ist der Fig. 5 zu entnehmen.

Die Steuerung 200 schafft somit wenigstens eine Möglichkeit kritischen Situationen, insbesondere kritischen Frequenzen, innerhalb eines elektrischen Versorgungsnetzes mittels Windenergieanlagen zu begegnen.

In einer besonders bevorzugten Ausführungsform wird die Steuerung dazu verwendet, subsynchronen Resonanzen im elektrischen Versorgungsnetz entgegen zu wirken, insbesondere mittels einer Blindleistungssteuerung der Windenergieanlagen und/oder des Windparks.

Es wird also insbesondere vorgeschlagen, die Blindleistung derart zu modulieren, dass benachbarte Verbraucher durch die, durch die veränderte Blindleistung, veränderte Frequenz im elektrischen Versorgungsnetz eine andere Wirkleistung beziehen.

Durch diese dynamische Blindleistungsstellung wird aktiv in den Wirkleistungsbezug benachbarter Verbraucher und somit in die Netzpendelungen eingegriffen.

Fig. 3 zeigt einen schematischen Aufbau eines Frequenzblockes einer Steuereinheit 300, insbesondere wie in Fig. 2 gezeigt.

Der Frequenzblock 300 weist als Eingangsgröße wenigstens eine Frequenz fi auf, bspw. einen Frequenzvorgabevektor f_GO oder einen unteren Grenzwert f_Low und einen oberen Grenzwert f_High für ein zu überwachendes Frequenzband f_high, f_Low umfassen.

Bevorzugt wird der Frequenzvorgabevektor f_GO vom Netzbetreiber vorgegeben, und liegt bspw. zwischen 0,1 Hz und 5 Hz.

Das Frequenzband ist bspw. so gewählt, dass es einen Frequenzbereich umfasst, in dem Störungen erwartet werden können bzw. als hinreichend wahrscheinlich angenommen werden können. Bevorzugt werden die Frequenzbänder in Abhängigkeit einer vorherrschenden Netztopologie bestimmt.

Innerhalb des zu überwachenden Frequenzbandes sucht also der Frequenzblock 300 bspw. mittels eines Analyseblockes 310 nach auffälligen Mustern und/oder Frequenzen fcon. Dies kann bspw. mittels einer Spektralanalyse SA oder eine (Fast-)Fourier-Transformation FFT erfolgen.

Die Bestimmung der auffälligen Frequenzen fcon erfolgt dabei weiter bevorzugt aus gemessenen Spannungen Umeas und Strömen Imeas heraus, die dem Analyseblock 310 über einen Messeingang zur Verfügung gestellt werden.

Es wird also insbesondere auch vorgeschlagen, aus den Spektren von Spannungen Umeas und Strömen Imeas kritische Frequenz zu ermitteln. Dies kann bspw. anhand der Amplituden der Spannungen Umeas und Ströme Imeas erfolgen, oder über aus diesen Messwerten berechneten Hilfsgrößen oder unter Verwendung von historischen Pegelwerten der Frequenzen. Eine Amplitude auf einer gewissen Frequenz gilt dabei bevorzugt dann als auffällig, wenn sie eine gewisse Schwelle gegenüber einem historischen Pegelmittelwert überschritten hat. Beispielsweise kann für Schwingungen in den gemessenen Spannungen und/oder Strömen eine Grenze von 0,5% des Nennwertes der Grundschwingung, also der Nennspannung oder des Nennstromes der Grundschwingung, festgelegt werden, so dass nur deutlich wahrnehmbare Schwingungen als kritische Frequenzen identifiziert werden.

Je nach Betriebsmodus MOD kann die entsprechende Frequenz f_GO, f_CON über eine Modusschaltung 320 als eine potentiell kritische Frequenz fpi ausgegeben bzw. eingestuft werden.

Es wird also insbesondere vorgeschlagen, aus der Frequenz fi eine potentiell kritische Frequenz fpi zu bestimmen.

Die Ausgabe der potentiell kritischen Frequenz bzw. Frequenzen fpi kann bspw. mittels eines Vektors erfolgen. Dieser Vektor kann auch als Ergebnisvektor des Frequenzblockes 300 bezeichnet werden.

Der Frequenzblock 300 ist somit insbesondere dazu eingerichtet, eine Information über das elektrische Versorgungsnetz in Form einer Frequenz fpi, bevorzugt in Form eines Vektors umfassend wenigstens eine Frequenz fpi, in Abhängigkeit einer erfassten und/oder bestimmten Frequenz fi bereitzustellen.

Die potentiell kritische Frequenz fpi kann zudem als Eingangssignal für einen Filterblock 400 verwendet werden, wie bspw. in Fig. 2 gezeigt.

Fig. 4 zeigt einen schematischen Aufbau eines Filterblocks 400 einer Steuereinheit, insbesondere wie in Fig. 2 gezeigt.

Der Filterblock 400 weist als Eingangsgröße wenigstens eine bzw. die potentiell kritische Frequenz fpi, wie bevorzugt in Fig. 3 generiert, und einen Vergleichswert Ai auf.

Der Vergleichswert Ai umfasst bspw. eine erfasste Spannung Umeas und/oder einen erfassten Strom Imeas sowie eine minimale Amplituden-Ansprechschwelle Lpi für jede potentiell kritische Frequenz fpi.

Bevorzugt ist die erfasste Spannung Umeas die Spannung Upoc, die am Netzanschlusspunkt des Windparks erfasst werden kann oder die Spannung, die an den Niederspannungsklemmen der Windenergieanlage erfasst werden kann.

Bevorzugt ist der erfasste Strom Imeas, der Strom Iline einer Leitung zwischen Windenergieanlage oder Windpark und elektrischem Versorgungsnetz.

Die minimale Amplituden-Ansprechschwelle Lpi entspricht einem Minimum, ab dem eine Reaktion erfolgen soll. Vorzugsweise wird die minimale Amplituden-Ansprechschwelle Lpi so gewählt, dass eine Reaktion nur dann erfolgt, wenn Schwingungen beispielsweise in der Spannung größer als ein gewisser Prozentsatz der Nennspannung der Grundschwingung, beispielsweise 0,5%, sind.

Sofern die potentiell kritischen Frequenzen nicht ausreichend bekannt sind, wird die Amplituden-Ansprechschwelle als kontinuierliches Frequenzspektrum definiert. Hierdurch existiert für jede Amplitude ein anwendbarer Amplituden-Ansprechschwellwert.

Der Filterblock 400 bestimmt bevorzugt aus der potentiell kritischen Frequenz fpi und/oder der erfassten Spannung Umeas und/oder dem erfassten Strom Imeas einen ProblemvektorXpi mittels eines Kalman-Filters 410, bspw. in aß-Koordinaten.

Der Problemvektor Xpi umfasst dabei bevorzugt die Amplitude und die Phasenlage der Schwingungskomponente bei der Frequenz fpi. Die Schwingungskomponente Die Schwingungskomponente ist insbesondere die Komponente im Frequenzspektrum von Strom oder Spannung (oder einer Hilfsgröße), die bei einer potentiell kritischen Frequenz fpi liegt.

Bevorzugt erfolgt die Bestimmung des Problemvektors Xpi in aß-Koordinaten.

Bevorzugt wird zudem die minimale Amplituden-Ansprechschwelle Lpi in aß-Koordinaten transformiert, bspw. mittels einer aß-Transformation 420.

Anschließend wird der Problemvektor Xpi in einem Komparator 430 mit dem minimalen Amplituden-Ansprechschwelle Lpi verglichen.

Sofern der bzw. die Vektoren mehrere Elemente aufweisen, wird jedes Element des Problemvektors Xpi mit einem jeweiligen Amplituden-Ansprechschwellwert Lpi verglichen.

Sofern Elemente des Problemvektors Xpi ihren jeweiligen Amplituden-Ansprechschwellwert Lpi überschreiten, werden diese Elemente als tatsächlich kritische Frequenz eingestuft.

Die Ausgabe des Komparators 430 ist also bevorzugt ebenfalls ein Vektor Xai, wobei dieser nur die tatsächlichen kritischen Frequenzen umfasst.

Anschließend wird bevorzugt eine Phasenkorrektur 440 vorgenommen, d.h. die einzelnen Elemente des Vektors Xai werden in ihrer Phasenlage entsprechend der Messungen, also Strom- und/oder Spannungsmessung, korrigiert, sodass ein phasenkorrigierte Vektor Xci entsteht.

Die Korrektur erfolgt dabei bevorzugt unter Verwendung eines Korrekturfaktor Lx, der bevorzugt dergestalt ist, dass noch weitere Korrekturen vorgenommen werden können, insbesondere bzgl. der Regelstrecke.

Der phasenkorrigierte Vektor Xci wird anschließend mit einem Proportionalitätsfaktor ki, dargestellt durch Block 450, multipliziert.

Das Ergebnis hieraus ist ein Vektor mit Spannungs- und/oder Stromsollwerten mit Schwingungskomponenten an den tatsächlich kritischen Frequenzen.

Die so gewonnen Spannungs- und/oder Stromsollwerte können anschließend als Steuerwerte Ucontrol, Icontrol verwendet werden. Die Steuerwerte Ucontrol, Icontrol können auch als Korrekturwerte Bi bezeichnet werden. Besonders bevorzugt ist ferner eine Begrenzung vorgesehen, die Steuerwerte Ucontrol, Icontrol auf ein Maximum begrenzt.

Der Filterblock 400 erzeugt also aus potentiell kritischen Frequenzen fpi und Vergleichswerten Ai Korrekturwerte Bi, insbesondere für Spannung und/oder Strom.

Die Steuerwerte Ucontrol, Icontrol können auch als Korrekturwerte Bi an einen Reglerblock gegeben werden, insbesondere als Eingangssignale an einen Reglerblock 500 wie bspw. in Fig. 5 gezeigt.

Fig. 5 zeigt einen schematischen Aufbau eines Reglerblocks 500 einer Steuereinheit, insbesondere wie in Fig. 2 gezeigt.

Der Reglerblock 500 weist als Eingangsgröße den Korrekturwert Bi, insbesondere in Form der Steuerwerte Ucontrol, Icontrol, und eine Führungsgröße Ci, insbesondere einen Spannungssollwert Uset und/oder einen Stromsollwert Iset und eine erfasste Spannung Upoc und/oder einen erfassten Strom Iline, auf.

Die erfasste Spannung Upoc kann auch als Ist-Spannung bezeichnet werden.

Die Eingangssignale, Spannungssollwert Uset bzw. Stromsollwert Iset und erfasste Spannung Upoc bzw. erfasster Strom Iline, werden voneinander subtrahiert, bspw. mittels einer Subtraktion 510, um eine Spannungsabweichung ΔU bzw. Stromabweichung Δl zu ermitteln.

Die Spannungsabweichung ΔU bzw. die Stromabweichung Δl bildet also eine Regelabweichung ab.

Auf diese Regeabweichung, also die Spannungsabweichung ΔU bzw. die Stromabweichung Δl, wird der Steuerwert Ucontrol bzw. der Steuerwert Icontrol addiert, bspw. mittels eines Addierers 520, um einen Spannungssteuerwert Uc bzw. einen Stromsteuerwert Ic zu ermitteln. Die Steuerwerte Ucontrol, Icontrol können hierfür bspw. wie in Fig. 4 gezeigt ermittelt werden.

Anschließend wird der Spannungssteuerwert Uc bzw. der Stromsteuerwert Ic einem Regler 530 zugeführt, der bspw. als P- oder PI-Regler ausgeführt ist.

Der Regler 530 erzeugt dann aus dem Spannungssteuerwert Uc bzw. dem Stromsteuerwert Ic einen Blindleistungsollwert Qset, der bspw. an eine Wechselrichtersteuerung der Windenergieanlage übergeben werden kann, um eine entsprechend amplitudenmodulierte Blindleistung Qmod bzw. Qpoc zu erzeugen.

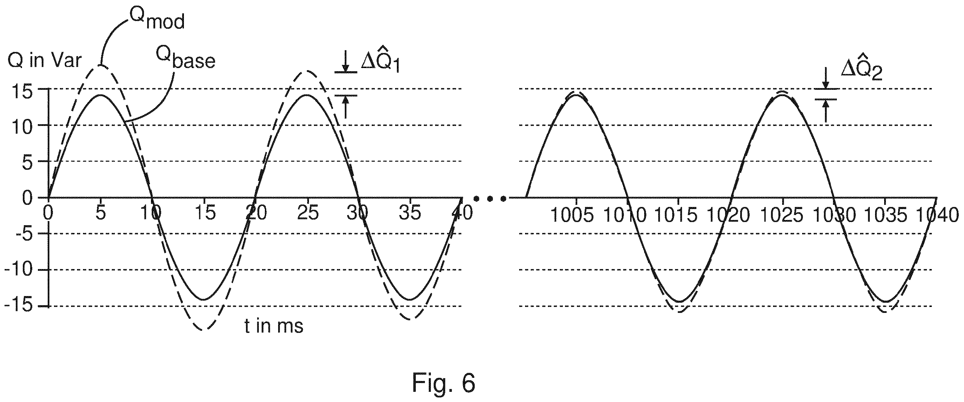

Fig. 6 zeigt eine amplitudenmodulierte Blindleistung Qmod, die durch einen Umrichter erzeugt wurde, der eine vorstehend oder nachstehend beschriebene Steuereinheit aufweist und/oder ein vorstehend oder nachstehend beschriebenes Verfahren ausführt.

Die amplitudenmodulierte Blindleistung Qmod weist eine Grundwelle Qbase auf, die mit einer Frequenz von 50 Hz schwingt.

Auf dieser Grundwelle Qbase ist eine Oberwelle moduliert, deren Amplitude um einen Betrag ΔQ1 bzw. ΔQ2 mit der Zeit schwingt, bspw. mit 0,8 Hz.

Diese Oberwelle wird dabei insbesondere so moduliert, dass den erfassten Netzpendelungen entgegengewirkt wird.

Die Blindleistung, die mit dem elektrischen Versorgungsnetz ausgetauscht wird, weist also eine zusätzliche Modulation auf, die außerhalb der Grundfrequenz liegt, die durch das elektrische Versorgungsnetz, bspw. mit 50Hz, vorgegeben ist.

Die Amplitude der Blindleistung wird also so moduliert, dass den erfassten Netzpendelungen entgegengewirkt wird.

### Bezugszeichen

- 100: Windenergieanlage
- 102: Turm der Windenergieanlage
- 104: Gondel der Windenergieanlage
- 106: aerodynamischer Rotor der Windenergieanlage
- 108: Rotorblatt der Windenergieanlage
- 110: Spinner der Windenergieanlage
- 200: Steuereinheit
- 300: Frequenzblock
- 310: Messeingang des Frequenzblockes
- 400: Filterblock
- 500: Reglerblock
- Ai: Vergleichswert
- Bi: Korrekturwert
- Ci: Führungsgröße
- Di: Stellgröße
- fi: Frequenz, insbesondere Frequenzsollwert
- fCON: auffällige Frequenz
- fGO: Frequenzvorgabe eines Netzbetreibers
- fHigh: oberen Grenzwert des Frequenzbandes
- fLow: unterer Grenzwert des Frequenzbandes
- fpi: potentielle kritische Frequenz
- fki: kritische Frequenz
- Imeas: erfasster Strom, insbesondere des elektrischen Versorgungsnetzes
- lline: erfasster Strom zwischen Windenergieanlage und elektrischen Versorgungsnetz
- Mi: Messeingang, insbesondere dreiphasig
- MOD: Steuerwert (Betriebsmodus)
- Uc: Spannungssteuerwert
- Ucontrol: Steuerwert
- Umeas: erfasste Spannung, insbesondere des elektrischen Versorgungsnetzes
- Upoc: Spannung am Netzanschlusspunkt
- ΔU: Spannungsabweichung
- Pmod: amplitudenmodulierte Wirkleistung
- Qmod: amplitudenmodulierte Blindleistung
- ΔQ1, ΔQ2: Betrag der Amplitudenschwingung

## Patentansprüche

1. Steuereinheit für einen Umrichter, insbesondere einer Windenergieanlage und/oder eines Windparks, umfassend:
- einen Eingang zum Aufnehmen einer erfassten Spannung (Umeas, Upoc) und/oder eines erfassten Stromes (Imeas, Iline),
- einen Eingang zum Aufnehmen eines Spannungssollwertes (Uset) und/oder eines Stromsollwertes (Iset),
- einen Eingang zum Aufnehmen eines Korrekturwertes (Bi) und
- eine Regelung (500), die dazu eingerichtet ist, in Abhängigkeit
- der erfassten Spannung (Umeas, Upoc) und/oder des erfassten Stromes (Imeas, Iline) und
- des Spannungssollwertes Uset und/oder des Stromsollwertes Iset und
- dem Korrekturwert (Bi)
einen Blindleistungssollwert (Qset) für eine modulierte, bevorzugt amplitudenmodulierte Blind- und/oder Wirkleistung (Qmod, Pmod) des Umrichters zu erzeugen.

2. Steuereinheit nach Anspruch 1, wobei
- der Korrekturwert (Bi) wenigstens einen Steuerwert (Ucontrol) umfasst oder
- der Steuerwert (Ucontrol) aus dem Korrekturwert (Bi) gebildet wird.

3. Steuereinheit nach Anspruch 1 oder 2, ferner umfassend:
eine Filterung (400), die dazu eingerichtet ist, aus einer potentiell kritischen Frequenz den Korrekturwert (Bi) zu erzeugen.

4. Steuereinheit nach Anspruch 3, wobei dazu eingerichtet ist,
- die Filterung (400) zum Erzeugen des Korrekturwertes (Bi) wenigstens einen Vergleichswert (Ai) berücksichtigt, der eine Identifikation einer kritischen Frequenz (XAI) ermöglicht.

5. Steuereinheit nach Anspruch 3 oder 4, wobei
- die Filterung (400) einen Kalman-Filter (410) und eine Phasenkorrektur (440) umfasst, wobei
- der Kalman-Filter (410) dazu eingerichtet ist, aus einer potentiell kritischen Frequenz (fpi) einen Problemvektor (Xpi) zu erzeugen, und
- die Phasenkorrektur (440) dazu eingerichtet ist, den Problemvektor (Xpi) zu korrigieren, um einen phasenkorrigierten Vektor (Xci) zu erhalten, der eine Grundlage für den Korrekturwert (Bi) bildet.

6. Steuereinheit nach einem der Ansprüche 3 bis 5, wobei
- die Filterung (400) mit aß-Koordinaten arbeitet und wenigstens einen Amplituden-Ansprech-Schwellwert (Lpi) aufweist, bei dessen überschreiten eine kritische Frequenz (fpi) identifiziert wird.

7. Steuereinheit nach wenigstens einem der vorstehenden Ansprüche, ferner umfassend
- eine Frequenzbestimmung (300), die dazu eingerichtet ist, aus einer Vielzahl von Frequenzen (fi) wenigstens eine potentiell kritische Frequenz (fpi) zu identifizieren, die insbesondere eine Netzpendelung im elektrischen Versorgungsnetz indiziert.

8. Steuereinheit nach Anspruch 6, wobei
- die Frequenzbestimmung (300) wenigstens zwei verschiedene Modi (fGO; fHigh, fLow) umfasst, um eine potentiell kritische Frequenz (fpi) zu identifizieren.

9. Verfahren zum Steuern eines Umrichters, insbesondere einer Windenergieanlage und/oder eines Windparks, umfassend die Schritte:
- Erfassen wenigstens einer Spannung (Umeas, Upoc) und/oder eines Stromes (Imeas, Iline),
- Austausch einer Blindleistung mit einem elektrischen Versorgungsnetz unter Verwendung einer Steuereinheit nach einem der Ansprüche 1 bis 8, insbesondere so, dass einer Netzpendelung entgegengewirkt bzw. bedämpft wird.

10. Verfahren zum Steuern eines elektrischen Versorgungsnetzes, umfassend die Schritte:
- Vorgeben einer Frequenz (fGO) oder eines Frequenzbereiches (fHigh, fLow), insbesondere durch einen Netzbetreiber,
- Prüfen, ob innerhalb der Frequenz (fGO) oder des Frequenzbereiches (fHigh, fLow) Schwingung auftreten, die insbesondere eine Netzpendelung darstellen,
- Regulieren der Blindleistung innerhalb des elektrischen Versorgungsnetzes so, dass die Schwingung gedämpft wird.

11. Verfahren zum Steuern eines elektrischen Versorgungsnetzes, wobei
- das Regulieren der Blindleitung mittels wenigstens einer Windenergieanlage oder eines Windparks erfolgt, insbesondere umfassend eine Steuereinheit nach einem der Ansprüche 1 bis 8.

12. Windenergieanlage und/oder Windpark, umfassend eine Steuereinheit nach einem der Ansprüche 1 bis 8.
